(19) **Europäisches Patentamt**
**European Patent Office**
**Office européen des brevets**

(11) **EP 4 773 094 A1**

(12) **EUROPEAN PATENT APPLICATION**
published in accordance with Art. 153(4) EPC

(43) Date of publication:
**08.07.2026 Bulletin 2026/28**

(21) Application number: **24874043.3**

(22) Date of filing: **05.09.2024**

(51) International Patent Classification (IPC):
*G06V 10/774* (2022.01)

(52) Cooperative Patent Classification (CPC):
**G06V 10/761; G06T 9/00; G06V 10/774; G06V 10/82**

(86) International application number:
**PCT/CN2024/117049**

(87) International publication number:
**WO 2025/073224 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.10.2023 CN 202311285085**

(71) Applicant: **Tencent Technology (Shenzhen) Company Limited**
**Shenzhen, Guangdong 518057 (CN)**

(72) Inventor: **WANG, Changan**
**Shenzhen, Guangdong 518057 (CN)**

(74) Representative: **Reddie & Grose LLP**
**The White Chapel Building**
**10 Whitechapel High Street**
**London E1 8QS (GB)**

(54) **IMAGE ENCODER DETERMINATION METHOD, AND RELATED DEVICE**

(57) The present application discloses an image encoder determination method, and a related device, which can be applied to various scenarios such as cloud technology, artificial intelligence, intelligent transportation and assisted driving. The method comprises: for a first sample image and a second sample image of a first object under different illumination parameters, inputting the first sample image into an image encoder in an initial reconstruction model for image encoding, and outputting first image block codes respectively corresponding to a plurality of first image blocks; inputting the plurality of first image block codes into a reconstruction network in the initial reconstruction model, and carrying out encoding prediction on a plurality of second image blocks in the second sample image to output a plurality of first predicted codes; and on the basis of a plurality of second image block codes obtained from the plurality of second image blocks by means of a pre-training encoder and a loss function, carrying out model training on the initial reconstruction model to obtain a first reconstruction model. The image encoder in the first reconstruction model is used as an image encoder in an initial detection model used for training an image defect detection model.

Perform image encoding on a first sample image through an image encoder in an initial reconstruction model, to obtain first image patch codes respectively corresponding to a plurality of first image patches in the first sample image, and obtain second image patch codes respectively corresponding to a plurality of second image patches in a second sample image, the second image patch codes respectively corresponding to the plurality of second image patches being obtain by respectively performing image encoding on the plurality of second image patches through a pre-trained encoder; and the first sample image and the second sample image being a plurality of scanned images of a first object under different lighting parameters — S201

Perform code prediction on the plurality of second image patches in the second sample image according to the first image patch codes respectively corresponding to the plurality of first image patches through a reconstruction network in the initial reconstruction model, to obtain first predicted codes respectively corresponding to the plurality of second image patches — S202

Perform model training on the initial reconstruction model according to the first predicted codes respectively corresponding to the plurality of second image patches, the second image patch codes respectively corresponding to the plurality of second image patches, and a loss function of the initial reconstruction model, to obtain a first reconstruction model — S203

Determine an image encoder in the first reconstruction model as an image encoder in an initial detection model configured to train an image defect detection model, the initial detection model being configured to train the image defect detection model — S204

FIG. 2

EP 4 773 094 A1

# Description

This application claims priority to Chinese Patent Application No. 202311285085.8, filed with the China National Intellectual Property Administration on October 07, 2023 and entitled "IMAGE ENCODER DETERMINATION METHOD AND RELATED APPARATUS".

## FIELD OF THE TECHNOLOGY

This application relates to the field of computer technologies, and in particular, to an image encoder determination technology.

## BACKGROUND OF THE DISCLOSURE

With the rapid development of artificial intelligence, product quality inspection refers to the following process: first, scanning imaging is performed on a to-be-inspected product to obtain a scanned image of the to-be-inspected product, and then automated defect detection is performed on the scanned image of the to-be-inspected product by using a visual algorithm.

In the related art, typically, labeling personnel label a particular quantity of defect samples from a plurality of scanned images corresponding to a plurality of inspected products, train an initial detection model to obtain an image defect detection model, and then perform defect detection on a scanned image of a to-be-inspected product through the image defect detection model.

However, it is relatively difficult to label a particular quantity of defect samples from a plurality of scanned images corresponding to a plurality of inspected products by the foregoing method, which requires long labeling time and high labeling cost, resulting in relatively high training cost for an image defect detection model and making it difficult to apply in a product quality inspection scenario with few defect products.

## SUMMARY

To address the foregoing technical problem, this application provides an image encoder determining method and a related apparatus, to reduce a quantity of labeled defect samples and reduce labeling time and labeling cost. Subsequently, an image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

Embodiments of this application disclose the following technical solutions.

In an aspect, the embodiments of this application provide an image encoder determination method.

The method is executable by a computer device, and the method includes:

performing image encoding on a first sample image by means of an image encoder of an initial reconstruction model, to obtain first image patch codes for a plurality of first image patches in the first sample image, and

performing image encoding on a second sample image by means of a pre-trained encoder, to obtain second image patch codes for a plurality of second image patches in the second sample image, wherein the first sample image and the second sample image are images of a first object under different lighting parameters;

performing code prediction on the plurality of second image patches in the second sample image by means of a reconstruction network of the initial reconstruction model, according to the first image patch codes for the plurality of first image patches, to obtain first predicted codes for the plurality of second image patches; and

performing model training on the initial reconstruction model using the first predicted codes, the second image patch codes, and a loss function of the initial reconstruction model, to obtain a first reconstruction model.

In another aspect, the embodiments of this application provide an image encoder determination apparatus. The apparatus is deployed on a computer device, and the apparatus includes: an encoding unit, a prediction unit, a training unit, and a determination unit.

The encoding unit is configured to: perform image encoding on a first sample image by means of an image encoder of an initial reconstruction model, to obtain first image patch codes for a plurality of first image patches in the first sample image, and perform image encoding on a second sample image by means of a pre-trained encoder, to obtain second image patch codes for a plurality of second image patches in the second sample image, wherein the first sample image and the second sample image are images of a first object under different lighting parameters.

The prediction unit is configured to perform code prediction on the plurality of second image patches in the second sample image by means of a reconstruction network of the initial reconstruction model, according to the first image patch codes for the plurality of first image patches, to obtain first predicted codes for the plurality of second image patches.

The training unit is configured to perform model training on the initial reconstruction model using the first predicted codes, the second image patch codes, and a loss function of the initial reconstruction model, to obtain a first reconstruction model.

In another aspect, the embodiments of this application provide a computer device. The computer device includes a processor and a memory.

The memory is configured to store a computer program and transmit the computer program to the processor.

The processor is configured to perform the method in any one of the foregoing aspects based on instructions in the computer program.

In another aspect, the embodiments of this application provide a computer-readable storage medium. The computer-readable storage medium is configured to store a computer program. The computer program, when run on a computer device, causes the computer device to perform the method in any one of the foregoing aspects.

In another aspect, the embodiments of this application provide a computer program product, which includes a computer program. The computer program, when run on a computer device, causes the computer device to perform the method in any one of the foregoing aspects.

According to the foregoing technical solution, first, the first sample image is inputted into the image encoder in the initial reconstruction model for image encoding, the first image patch codes respectively corresponding to the plurality of first image patches in the first sample image are outputted, and the second image patch codes respectively corresponding to the plurality of second image patches in the second sample image are obtained. The second image patch codes respectively corresponding to the plurality of second image patches are obtained by respectively performing image encoding on the plurality of second image patches through the pre-trained encoder, are accurate encoding results of the second image patches, and can serve as supervisory signals for training the initial reconstruction model. The first sample image and the second sample image are the plurality of scanned images of the first object under different lighting parameters. A plurality of scanned images of the same object under different lighting parameters have a correlation. Therefore, the correlation may be mined by reconstructing image patch codes. In view of this, the first image patch codes respectively corresponding to the plurality of first image patches are inputted into the reconstruction network in the initial reconstruction model, to mine a correlation between the plurality of scanned images. Code prediction is performed on the plurality of second image patches in the second sample image based on the first image patch codes respectively corresponding to the plurality of first image patches, and the first predicted codes respectively corresponding to the plurality of second image patches are outputted. The first predicted code is a predicted encoding result. Therefore, model training may be performed on the initial reconstruction model according to the first predicted codes respectively corresponding to the plurality of second image patches, the second image patch codes respectively corresponding to the plurality of second image patches, and the loss function of the initial reconstruction model, to obtain the first reconstruction model. In this way, the image encoder in the initial reconstruction model is optimized, to endow the image encoder in the first reconstruction model with high feature expression capability.

Then, the image encoder in the first reconstruction model is determined as the image encoder in the initial detection model configured to train the image defect detection model. In this manner, the image encoder in the foregoing first reconstruction model obtained through self-supervised training is taken as the image encoder in the initial detection model, whereby a quantity of labeled defect samples can be reduced. Subsequently, the image defect detection model with high feature expression capability can be obtained by training the initial detection model with the defect samples in combination with a large number of scanned images of a normal object serving as normal samples.

Based on this, the method takes the advantage of the characteristics that a plurality of scanned images of the same object under different lighting parameters have a correlation, the correlation is mined by reconstructing image patch codes, and the image encoder in the reconstruction model is optimized, to endow the image encoder with high feature expression capability. The optimized image encoder is applied to the detection model, whereby a quantity of labeled defect samples is reduced, and labeling time and labeling cost are reduced. Subsequently, the image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

BRIEF DESCRIPTION OF THE DRAWINGS

To describe technical solutions in embodiments of this application or in the related art more clearly, the following briefly introduces accompanying drawings for describing the embodiments or the related art. Apparently, the accompanying drawings in the following description show merely some embodiments of this application, and a person of ordinary skill in the art may still derive other drawings from these accompanying drawings without creative efforts.

FIG. 1 is a schematic diagram of a system architecture of an image encoder determination method according to an embodiment of this application.

FIG. 2 is a flowchart of an image encoder determination method according to an embodiment of this application.

FIG. 3 is a schematic diagram of a plurality of image patches in a scanned image of an object corresponding to a plurality of points under one lighting parameter according to an embodiment of this application.

FIG. 4 is a schematic diagram of performing image encoding on a scanned image of an object through an image encoder in an initial reconstruction model, to obtain a plurality of image patch codes corresponding to a plurality of image patches in the scanned image of the object according to an embodiment of this application.

FIG. 5 is a structural diagram of an initial encoder according to an embodiment of this application.

FIG. 6 is a schematic diagram of a pre-trained encoder obtained by training an initial encoder and an initial decoder according to an embodiment of this application.

FIG. 7 is a schematic diagram of a multi-stage cascade detector according to an embodiment of this application.

FIG. 8 is a schematic diagram of output data of defect detection performed on a scanned image of a to-be-inspected product through an image defect detection model according to an embodiment of this application.

FIG. 9 is a structural diagram of an image encoder determination apparatus according to an embodiment of this application.

FIG. 10 is a structural diagram of a server according to an embodiment of this application.

FIG. 11 is a structural diagram of a terminal according to an embodiment of this application.

DESCRIPTION OF EMBODIMENTS

The following describes embodiments of this application with reference to the accompanying drawings.

At present, automatic defect detection is performed on a scanned image of a to-be-inspected product by using a visual algorithm, to achieve intelligent product quality inspection. Specifically, the process includes: first, labeling personnel label a particular quantity of defect samples from a plurality of scanned images corresponding to a plurality of inspected products, train an initial detection model to obtain an image defect detection model, and then perform defect detection on a scanned image of a to-be-inspected product through the image defect detection model.

However, in a product quality inspection scenario with few defect products such as an industrial quality inspection scenario, it is relatively difficult to label a particular quantity of defect samples from a plurality of scanned images corresponding to a plurality of detected products by the foregoing method, which requires long labeling time and high labeling cost, resulting in relatively high training cost for an image defect detection model and relatively high quality inspection cost for intelligent product quality inspection.

An image encoder determination method provided in the embodiments of this application takes the advantage of the characteristics that a plurality of scanned images of the same object under different lighting parameters have a correlation, the correlation is mined by reconstructing image patch codes, and an image encoder in a reconstruction model is optimized, to endow the image encoder with high feature expression capability. The optimized image encoder is applied to a detection model, whereby a quantity of labeled defect samples is reduced, and labeling time and labeling cost are reduced. Subsequently, an image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

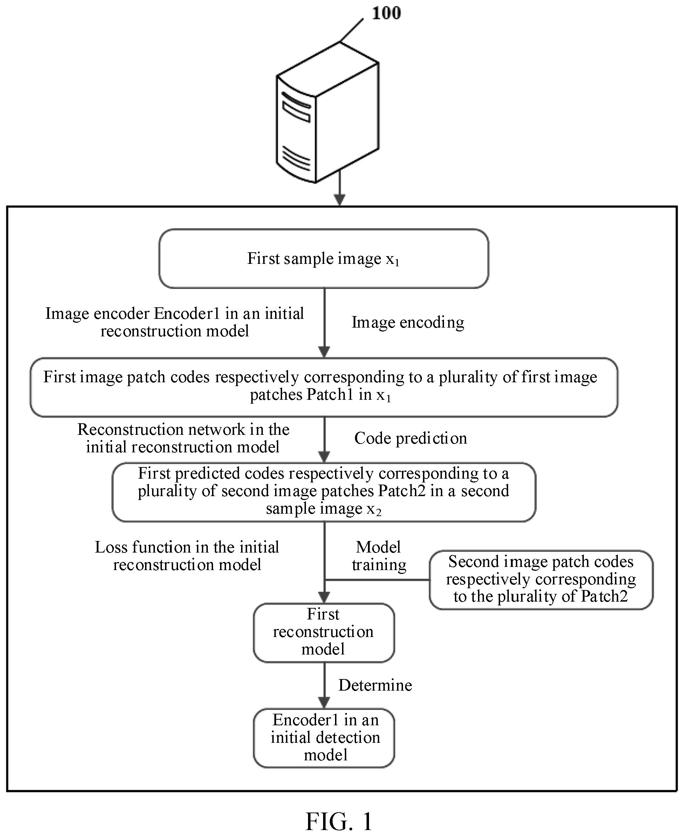

Next, a system architecture of an image encoder determination method is described. FIG. 1 is a schematic diagram of a system architecture of an image encoder determination method according to an embodiment of this application. The system architecture includes a server 100. The server 100 is configured to perform the image encoder determination method.

The server 100 performs image encoding on a first sample image through an image encoder in an initial reconstruction model, to obtain a plurality of first image patch codes corresponding to a plurality of first image patches in the first sample image.

As an example, the image encoder is Encoder1, the first sample image is $x_1$, and the first image patch is Patchl. The server 100 inputs $x_1$ into Encoder1 in the initial reconstruction model for image encoding, and outputs the first image patch codes respectively corresponding to the plurality of Patch1 in $x_1$. The first image patch code may be denoted as $z_1$, that is, a plurality of $z_1$ are obtained.

The server 100 performs code prediction on a plurality of second image patches in a second sample image according to the plurality of first image patch codes through a reconstruction network in the initial reconstruction model, to obtain first predicted codes respectively corresponding to the plurality of second image patches. The first sample image and the second sample image are a plurality of scanned images of a first object under different lighting parameters. In embodiments of the present application, scanned images are generated by capturing a first object under different lighting parameters.

As an example, the second sample image is $x_2$, and the second image patch is Patch2. Based on the foregoing example, the server 100 inputs the plurality of $z_1$ into the reconstruction network in the initial reconstruction model, performs code prediction on the plurality of Patch2 in $x_2$, and outputs the first predicted codes respectively corresponding to the plurality of Patch2. The first predicted code may be denoted as $z_p$, that is, a plurality of $z_p$ are obtained.

The server 100 performs model training on the initial reconstruction model according to the first predicted codes respectively corresponding to the plurality of second image patches, the second image patch codes respectively corresponding to the plurality of second image patches, and a loss function of the initial reconstruction model, to obtain a first reconstruction model. The plurality of second image patch codes are obtained by performing image encoding on the plurality of second image patches through a pre-trained encoder.

As an example, the pre-trained encoder is Encoder2. Based on the foregoing example, the server 100 inputs $x_2$ into Encoder2 for image encoding, and outputs the second image patch codes respectively corresponding to the plurality of Patch2 in $x_2$. The second image patch code may be denoted as $z_2$, that is, a plurality of $z_2$ are obtained. The server performs model training on the initial reconstruction model according to the plurality of $z_p$, the plurality of $z_2$, and the loss function of the initial reconstruction model, to obtain the first reconstruction model.

The server 100 determines an image encoder in the first reconstruction model as an image encoder in an initial detection model configured to train an image defect detection model. The initial detection model is configured to train the image defect detection model.

As an example, based on the foregoing example, the server 100 determines Encoder1 in the first reconstruction model as Encoder1 in the initial detection model configured to train the image defect detection model.

In other words, based on a fact that a plurality of scanned images of the same object under different lighting parameters have a correlation, the correlation is mined by reconstructing image patch codes, and self-supervised training is performed on the initial reconstruction model to obtain the first reconstruction model. That is, according to the method, the image encoder in the initial reconstruction model is optimized by using a plurality of unlabeled scanned images of the same object under different lighting parameters, to endow the image encoder in the first reconstruction model with high feature expression capability. The image encoder in the foregoing first reconstruction model obtained through self-supervised training is taken as the image encoder in the initial detection model, whereby a quantity of labeled defect samples can be reduced. Subsequently, the image defect detection model with high feature expression capability can be obtained by training the initial detection model with the defect samples in combination with a large number of scanned images of a normal object serving as normal samples. Based on this, the method takes the advantage of the characteristics that a plurality of scanned images of the same object under different lighting parameters have a correlation, the correlation is mined by reconstructing image patch codes, and the image encoder in the reconstruction model is optimized, to endow the image encoder with high feature expression capability. The optimized image encoder is applied to the detection model, whereby a quantity of labeled defect samples is reduced, and labeling time and labeling cost are reduced. Subsequently, the image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

In the embodiments of this application, the computer device may be a server or a terminal. The method provided in the embodiments of this application may be performed by the terminal or the server alone, or may be cooperatively performed by the terminal and the server. The embodiment corresponding to FIG. 1 is described mainly by using an example in which the server performs the method provided in the embodiments of this application.

In addition, when the method provided in the embodiments of this application is performed by the terminal alone, the method performed by the terminal is similar to that in the embodiment corresponding to FIG. 1. The server is mainly replaced with the terminal. In addition, when the method provided in the embodiments of this application is cooperatively performed by the terminal and the server, operations that need to be embodied on a front-end interface may be performed by the terminal, while some operations that need backend calculations and that do not need to be embodied on the front-end interface may be performed by the server.

The terminal may be, but is not limited to, a smartphone, a tablet computer, a notebook computer, a desktop computer, a smart voice interaction device, an on-board terminal, or an aircraft. The server may be, but is not limited to, an independent physical server, a server cluster or distributed system composed of a plurality of physical servers, or a cloud server providing a cloud computing service. The terminal and the server may be directly or indirectly connected by using a wired or wireless communication protocol. This is not limited in this application. For example, the terminal and the server may be connected via a network, and the network may be a wired or wireless network.

In the embodiments of this application, the image encoder may be automatically determined by an artificial intelligence technology.

In addition, the embodiments of this application may be applied to various scenarios, including but not limited to a cloud technology, artificial intelligence, intelligent transportation, audio/video, assisted driving, and the like.

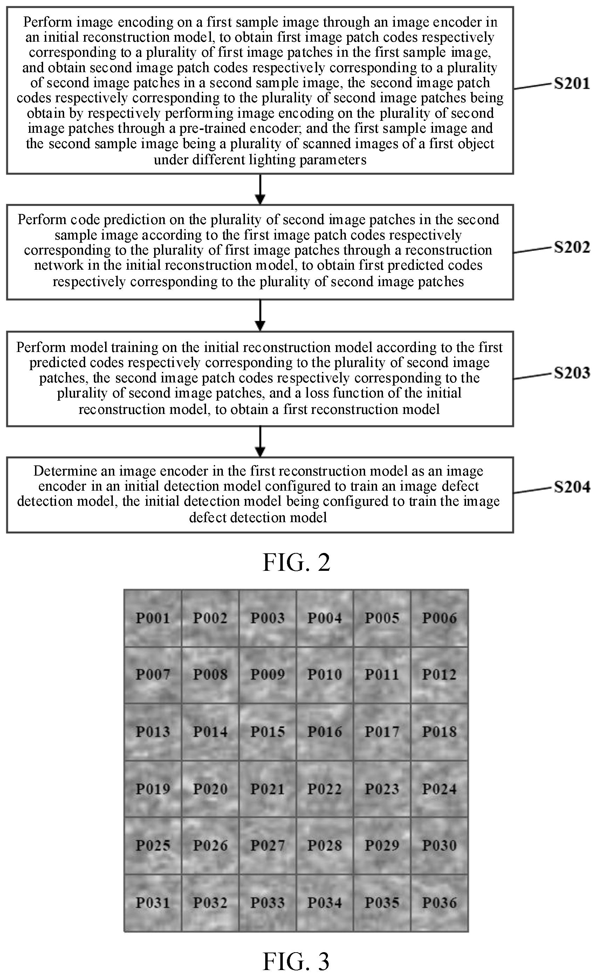

Next, the image encoder determination method provided in the embodiments of this application is described in detail below with reference to the accompanying drawings by using an example in which the method provided in the embodiments of this application is performed by a server. FIG. 2 is a flowchart of an image encoder determination method according to an embodiment of this application. The method includes:

S201: Perform image encoding on a first sample image through an image encoder in an initial reconstruction model, to obtain first image patch codes respectively corresponding to a plurality of first image patches in the first sample image, and obtain second image patch codes respectively corresponding to a plurality of second image patches in a second sample image, the second image patch codes respectively corresponding to the plurality of second image patches being obtained by respectively performing image encoding on the plurality of second image patches through a pre-trained encoder; and the first sample image and the second sample image being a plurality of scanned images of a first object under different lighting parameters.

In the related art, labeling personnel label a particular quantity of defect samples from a plurality of scanned images corresponding to a plurality of inspected products, train an initial detection model to obtain an image defect detection model, and then perform defect detection on a scanned image of a to-be-inspected product through the image defect detection model. However, in a product quality inspection scenario with few defect products such as an industrial quality inspection scenario, it is relatively difficult to label a particular quantity of defect samples from a plurality of scanned images corresponding to a plurality of detected products by the foregoing method, which requires long labeling time and high labeling cost, resulting in relatively high training cost for an image defect detection model and relatively high quality inspection cost for intelligent product quality inspection.

Therefore, in the embodiments of this application, a fact that in a scanning imaging scenario, different lighting parameters are typically configured for capturing images of a to-be-inspected product, any lighting parameter in the different lighting parameters includes dozens of different points, and the same point exhibits a correlation across a plurality of scanned images of the same to-be-inspected product under the different lighting parameters is taken into account. Based on this, to address the foregoing technical problem, first, a reconstruction model including an image encoder and a reconstruction network may be constructed. For the same to-be-inspected product, a scanned image under one or more lighting parameters is encoded through the image encoder into image patch codes of a plurality of image patches in the scanned image, predicted codes of a plurality of image patches in a scanned image under another lighting parameter are predicted through the reconstruction network, self-supervised training is performed on the reconstruction model according to the predicted codes under another lighting parameter, image patch codes under another lighting parameters, and a loss function of the initial reconstruction model to mine a correlation, and the image encoder in the reconstruction model is optimized, to endow the image encoder with high feature expression capability. The image patch codes under another lighting parameter are obtained by encoding the scanned image under another lighting parameter through a pre-trained encoder. Then, the optimized image encoder is applied to a detection model, whereby a quantity of labeled defect samples is reduced, and labeling time and labeling cost are reduced. Subsequently, an image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

Scanning imaging may include two scanning manners, namely, area array scanning and line scanning. In scanning imaging implemented in different scanning manners, obtained scanned images are different. Area array scanning may refer to performing scanning through an area array scanning camera to obtain a corresponding scanned image. In this case, the scanned image may be referred to as an area array scanned image. That is, the first sample image and the second sample image may be a plurality of area array scanned images of the first object under different lighting parameters. Line scanning may refer to performing scanning through a line scanning camera to obtain a corresponding scanned image. In this case, the scanned image may be referred to as a line scanned image. That is, the first sample image and the second sample image may be a plurality of line scanned images of the first object under different lighting parameters.

Different lighting parameters may be formed in a plurality of manners. In a possible implementation, different lighting parameters may be implemented by different light source hardware. For example, an object is irradiated by different light source hardware, to obtain scanned images under different lighting parameters. In another possible implementation, different lighting parameters may be implemented by the same light source hardware in different lighting modes. For example, one light source hardware has a plurality of lighting modes, and the lighting modes correspond to different lighting parameters. In this case, by adjusting different lighting modes, scanned image under different lighting parameters are obtained.

Based on the foregoing description, first, the reconstruction model including the image encoder and the reconstruction network is constructed as the initial reconstruction model. Based on a to-be-inspected product belonging to the object, the scanned image of the first object under one or more lighting parameters is taken as the first sample image; the first sample image is inputted into the image encoder in the initial reconstruction model for image encoding, and the first image patch codes respectively corresponding to the plurality of first image patches in the first sample image are outputted.

Reconstruction is a technology in which three-dimensional reconstruction data of an object is obtained by processing, calculating, and three-dimensional restoring a two-dimensional image of the object, and finally a three-dimensional model of the object is really reconstructed in a computer. Therefore, in the embodiments of this application, the reconstruction model may refer to a neural network model configured to reconstruct a two-dimensional graphic, for example, including a to-be-trained initial reconstruction model and a trained first reconstruction model.

The initial reconstruction model may include an image encoder and a reconstruction network. The image encoder is configured to encode each image patch in a sample image inputted into the initial reconstruction model to obtain a corresponding image patch code. The reconstruction network is configured to mine a correlation between a plurality of scanned images under different lighting parameters. In this way, first predicted code respectively corresponding to the plurality of second image patches in the second sample image can be predicted based on the first image patch codes respectively corresponding to the plurality of first image patches in the first sample image.

Network structures of the image encoder and the reconstruction network are not limited in the embodiments of this application. For example, the image encoder may include a convolutional layer, a pooling layer, and a fully-connected layer. Certainly, the network structure of the image encoder may alternatively be similar to a network structure of a subsequent initial encoder. This is not limited in the embodiments of this application. For example, the reconstruction network may include a deconvolutional layer, an upsampling layer, and a fully-connected layer.

In the embodiments of this application, the first object may be any object. The image defect detection model obtained through training in the embodiments of this application is configured to perform defect detection on a to-be-inspected product, and the to-be-inspected product belongs to a to-be-inspected object. Therefore, to be more applicable to a defect detection scenario, the first object may be a first to-be-inspected object.

In practical application, first, the first sample image is divided into the plurality of first image patches, and then image encoding is performed on the plurality of first image patches through the image encoder, to obtain the first image patch codes respectively corresponding to the plurality of first image patches.

Image encoding refers to mapping an image to a low-dimensional representation. The low-dimensional representation may be a vector or a matrix, and typically has high interpretability and high expression capability. Image encoding is a broader concept, and includes an entire process of converting an image into a lower-dimensional representation. The first image patch code refers to a low-dimensional representation of an image patch feature of the first image patch, and can better explain and express the image patch feature of the first image patch.

In S201, the scanned image of the first object under one or more lighting parameters, namely, the first sample image, is encoded through the image encoder into the first image patch codes respectively corresponding to the plurality of first image patches in the first sample image. In this way, image patch code data is provided for subsequently reconstructing the image patch codes to mine a correlation between the plurality scanned images of the first object under different lighting parameters.

As an example of S201, the image encoder is Encoder1, the first sample image is $x_1$, and the first image patch is Patchl. $x_1$ is inputted into Encoder1 in the initial reconstruction model for image encoding, and the first image patch codes respectively corresponding to the plurality of Patch1 in $x_1$ are outputted, that is, a plurality of $z_1$ are outputted.

FIG. 3 is a schematic diagram of a plurality of image patches in a scanned image of an object corresponding to a plurality of points under one lighting parameter according to an embodiment of this application. One lighting parameter includes $6 \times 6$ points, namely, 36 points. Correspondingly, each scanned image of each object needs to be divided into 36 image patches, namely, P001, P002, ..., and P036. Based on this, the plurality of Patch1 may be 36 Patchl.

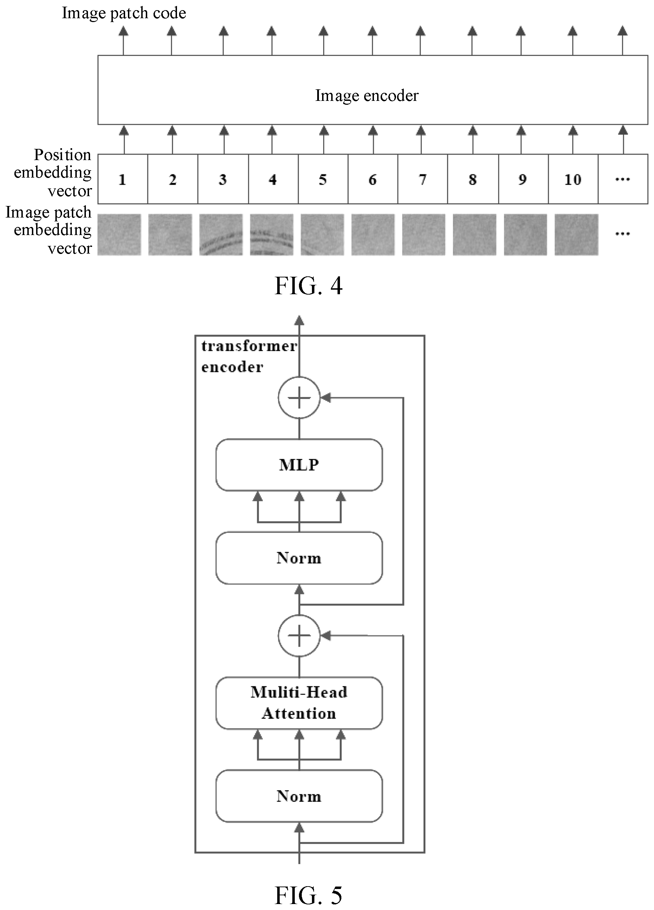

FIG. 4 is a schematic diagram of performing image encoding on a scanned image of an object through an image encoder in an initial reconstruction model, to obtain image patch codes respectively corresponding to a plurality of image patches in the scanned image according to an embodiment of this application. For each scanned image of each object, the scanned image is divided into a plurality of image patches, and based on image patch embedding vectors and position embedding vectors respectively corresponding to the plurality of image patches, the image patch embedding vectors and position embedding vectors respectively corresponding to the plurality of image patches are inputted into the image encoder in the initial reconstruction model for image encoding, to obtain image patch codes respectively corresponding to the plurality of image patches. Based on this, image patch embedding vectors and position embedding vectors respectively corresponding to the plurality of Patch1 are inputted into Encoder1 in the initial reconstruction model for image encoding, and $z_1$

respectively corresponding to the plurality of Patch1 are outputted.

A model structure of the pre-trained encoder may be the same as a model structure of the image encoder in the initial reconstruction model.

In practical application, first, the second sample image is divided into the plurality of second image patches, and then image encoding is performed on the plurality of second image patches through the pre-trained encoder, to obtain the second image patch codes respectively corresponding to the plurality of second image patches. The second image patch code refers to a low-dimensional representation of an image patch feature of the second image patch, and can better explain and express the image patch feature of the second image patch.

In the embodiments of this application, there are a plurality of methods for obtaining the second image patch codes respectively corresponding to the plurality of second image patches in the second sample image. One method may include: the second image patch codes respectively corresponding to the plurality of second image patches are obtained through the pre-trained encoder in advance and stored. In this way, when S201 is performed, the second image patch codes respectively corresponding to the plurality of second image patches may be directly read from storage space. Therefore, obtaining efficiency is enhanced.

Another method may include: when S201 is performed, the second image patch codes respectively corresponding to the plurality of second image patches may be obtained through the pre-trained encoder. In this way, image encoding can be performed in real time according to a current actual requirement, to obtain the second image patch codes respectively corresponding to the plurality of second image patches that meet the requirement.

S202: Perform code prediction on the plurality of second image patches in the second sample image according to the first image patch codes respectively corresponding to the plurality of first image patches through a reconstruction network in the initial reconstruction model, to obtain first predicted codes respectively corresponding to the plurality of second image patches.

In the embodiments of this application, after the first image patch codes respectively corresponding to the plurality of first image patches are obtained by performing S201, in view of a fact that the plurality of scanned images of the first object under different lighting parameters have a correlation, to mine the associations to optimize the image encoder in the initial reconstruction model and endow an image encoder in a first reconstruction model with high feature expression capability, the image patch codes may be reconstructed. To be specific, based on a scanned image of the first object under another lighting parameter serving as the second sample image, the plurality of first image patch codes are inputted into the reconstruction network in the initial reconstruction model, code prediction is performed on the plurality of second image patches in the second sample image, and the first predicted codes respectively corresponding to the plurality of second image patches are outputted.

Code prediction refers to prediction of a low-dimensional representation of an image by using an image reconstruction mechanism, and involves prediction of current to-be-encoded information according to encoded information. That is, in the embodiments of this application, a low-dimensional representation of the second image patch is predicted based on the first image patch codes. The first predicted codes refer to a predicted low-dimensional representation of the plurality of second image patches in the second sample image.

When a scanned image of the first object under one or more lighting parameters and a scanned image of the first object under another lighting parameter are three scanned images of the first object under three lighting parameters, two scanned images of the first object under any two lighting parameters in the three scanned images of the first object under the three lighting parameters are taken as first sample images, and the scanned image of the first object under another lighting parameter of the three scanned images of the first object under the three lighting parameters is taken as a second sample image. The two scanned images of the first object under any two lighting parameters may be repeatedly sampled, to implement three-channel input of the first sample images into the image encoder in the initial reconstruction model.

In S202, based on S201, the first predicted codes respectively corresponding to the plurality of second image patches under another lighting parameter are predicted according to the plurality of first image patch codes under one or more lighting parameters through the reconstruction network, to reconstruct image patch codes. In this way, predicted code data is provided for subsequently mining a correlation between the plurality of scanned image of the first object under different lighting parameters and performing self-supervised training on the initial reconstruction model to obtain a first reconstruction model.

As an example of S202, the second sample image is $x_2$, and the second image patch is Patch2. Based on the foregoing example of S201, the plurality of first image patch codes $z_1$ are inputted into the reconstruction network in the initial reconstruction model, code prediction is performed on the plurality of Patch2 in $x_2$, and the first predicted codes respectively corresponding to the plurality of Patch2 are outputted, that is, a plurality of $z_p$ are outputted.

S203: Perform model training on the initial reconstruction model according to the first predicted codes respectively corresponding to the plurality of second image patches, the second image patch codes respectively corresponding to the plurality of second image patches, and a loss function of the initial reconstruction model, to obtain a first reconstruction model.

In the embodiments of this application, after the first predicted code respectively corresponding to the plurality of second image patches are obtained by performing prediction in S202, to mine the correlation between the plurality of scanned images of the first object under different lighting parameters and optimize the image encoder in the initial reconstruction model to endow an image encoder in the first reconstruction model with high feature expression capability, self-supervised training may be performed on the initial reconstruction model. To be specific, based on the input of the second sample image into the pre-trained encoder for image encoding and output of the second image patch codes respectively corresponding to the plurality of second image patches in the second sample image, model training is performed on the initial reconstruction model according to the plurality of first predicted codes, the plurality of second image patch codes, and the loss function of the initial reconstruction model, to obtain the first reconstruction model.

The loss function of the initial reconstruction model is configured for measuring a difference between each first predicted code and the corresponding second image patch code. Model training refers to parameter adjustment of model parameters of the initial reconstruction model. The first reconstruction model refers to an initial reconstruction model subjected to model training. A model training end condition is that model training of the initial reconstruction model converges or a number of model training times of the initial reconstruction model reaches a maximum number of training times.

In S203, a correlation between each first predicted code and the corresponding second image patch code is mined by using the loss function of the initial reconstruction model, to mine the correlation between the plurality of scanned images of the first object under different lighting parameters. In this way, self-supervised training of the initial reconstruction model is implemented, the image encoder in the initial reconstruction model is optimized, to endow the image encoder in the first reconstruction model with high feature expression capability, and the image encoder is provided for subsequently constructing an initial detection model configured to train an image defect detection model.

As an example of S203, the pre-trained encoder is Encoder2. Based on the foregoing example of S202, the plurality of second image patches Patch2 in the second sample image $x_2$ are inputted into Encoder2 for image encoding, and the second image patch codes respectively corresponding to the plurality of Patch2 are outputted, that is, a plurality of $z_2$ are outputted. Model training is performed on the initial reconstruction model according to the plurality of first predicted codes $z_p$, the plurality of $z_2$, and the loss function of the initial reconstruction model, to obtain the first reconstruction model.

S204: Determine an image encoder in the first reconstruction model as an image encoder in an initial detection model configured to train an image defect detection model, the initial detection model being configured to train the image defect detection model.

In the embodiments of this application, after the first reconstruction model is obtained by performing training in S203, in view of that fact that the image encoder in the first reconstruction model has high feature expression capability and the initial detection model is configured to train the image defect detection model, the image encoder in the first reconstruction model is determined as the image encoder in the initial detection model, whereby a quantity of labeled defect samples can be reduced, and labeling time and labeling cost are reduced. Subsequently, the image defect detection model with high feature expression capability can be obtained by training the initial detection model with the defect samples in combination with a large number of scanned images of a normal inspected object serving as normal samples. In this way, training cost of the image defect detection model is reduced, and the image defect detection model is applicable to a product quality inspection scenario with few defect products.

In S204, the image encoder in the first reconstruction model obtained through self-supervised training is taken as the image encoder in the initial detection model, whereby a quantity of labeled defect samples can be reduced. Subsequently, the image defect detection model with high feature expression capability can be obtained by training the initial detection model with the defect samples in combination with a large number of scanned images of a normal object serving as normal samples.

As an example of S204, based on the foregoing example of S203, the image encoder Encoder1 in the first reconstruction model is determined as Encoder1 in the initial detection model configured to train the image defect detection model.

According to the foregoing technical solution, first, the first sample image is inputted into the image encoder in the initial reconstruction model for image encoding, the first image patch codes respectively corresponding to the plurality of first image patches in the first sample image are outputted, and the second image patch codes respectively corresponding to the plurality of second image patches in the second sample image are obtained. The second image patch codes respectively corresponding to the plurality of second image patches are obtained by respectively performing image encoding on the plurality of second image patches through the pre-trained encoder, are accurate encoding results of the second image patches, and can serve as supervisory signals for training the initial reconstruction model. The first sample image and the second sample image are the plurality of scanned images of the first object under different lighting parameters. A plurality of scanned images of the same object under different lighting parameters have a correlation. Therefore, the correlation may be mined by reconstructing image patch codes. In view of this, the first image patch codes respectively corresponding to the plurality of first image patches are inputted into the reconstruction network in the initial reconstruction model, to mine a correlation between the plurality of scanned images. Code prediction is performed on the plurality of second image patches in the second sample image based on the first image patch codes respectively corresponding to the plurality of first image patches, and the first predicted codes respectively corresponding to the plurality of second image patches are outputted. The first predicted code is a predicted encoding result. Therefore, model training may be performed on the initial reconstruction model according to the first predicted codes respectively corresponding to the plurality of second image patches, the second image patch codes respectively corresponding to the plurality of second image patches, and the loss function of the initial reconstruction model, to obtain the first reconstruction model. In this way, the image encoder in the initial reconstruction model is optimized, to endow the image encoder in the first reconstruction model with high feature expression capability.

Then, the image encoder in the first reconstruction model is determined as the image encoder in the initial detection model configured to train the image defect detection model. In this manner, the image encoder in the foregoing first reconstruction model obtained through self-supervised training is taken as the image encoder in the initial detection model, whereby a quantity of labeled defect samples can be reduced. Subsequently, the image defect detection model with high feature expression capability can be obtained by training the initial detection model with the defect samples in combination with a large number of scanned images of a normal object serving as normal samples.

Based on this, the method takes the advantage of the characteristics that a plurality of scanned images of the same object under different lighting parameters have a correlation, the correlation is mined by reconstructing image patch codes, and the image encoder in the reconstruction model is optimized, to endow the image encoder with high feature expression capability. The optimized image encoder is applied to the detection model, whereby a quantity of labeled defect samples is reduced, and labeling time and labeling cost are reduced. Subsequently, the image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

In the foregoing embodiments, during specific implementation of S203, the loss function of the initial reconstruction model may be a cross-entropy loss function. Based on this, first, the plurality of first predicted codes and the plurality of second image patch codes are substituted into the cross-entropy loss function, to calculate a first predicted probability that each first predicted code is the corresponding second image patch code. Then, in view of a fact that a training direction of the initial reconstruction model is to make the plurality of first predicted codes close to the plurality of corresponding second image patch codes, by maximizing the plurality of first predicted probabilities, model training is performed on the initial reconstruction model to obtain the first reconstruction model. Therefore, this application provides a possible implementation. The loss function of the initial reconstruction model is a cross-entropy loss function; and S203 includes S2031 and S2032 (not shown in the figure):

S2031: Determine, according to the first predicted codes respectively corresponding to the plurality of second image patches, the second image patch codes respectively corresponding to the plurality of second image patches, and the cross-entropy loss function, a first predicted probability that each first predicted code is the corresponding second image patch code.

S2032: Perform model training on the initial reconstruction model with a goal of maximizing the plurality of first predicted probabilities, to obtain the first reconstruction model.

In S2031 and S2032, the correlation between the plurality of scanned images of the first object under different lighting parameters is accurately mined by calculating the first predicted probability that the first predicted code is the corresponding second image patch code. By maximizing the plurality of first predicted probabilities, the initial reconstruction model is trained according to the training direction of making the plurality of first predicted codes close to the plurality of corresponding second image patch codes, whereby self-supervised training of the initial reconstruction model is accurately achieved, and the image encoder in the initial reconstruction model is accurately optimized, to endow the image encoder in the first reconstruction model with high feature expression capability.

As an example of S2031 and S2032, based on the foregoing example of S203, the plurality of first predicted codes $z_p$ and the plurality of second image patch codes $z_2$ are substituted into the cross-entropy loss function, to calculate the first predicted probability that each $z_p$ is corresponding $z_2$. The first predicted probability may be denoted as $p_1$, that is, a plurality of $p_1$ are obtained. By maximizing the plurality of $p_1$, model training is performed on the initial reconstruction model to obtain the first reconstruction model.

In the foregoing embodiments, the pre-trained encoder is obtained through pre-training. In view of a fact that the scanned image of the object is obtained by clearly shooting the object, the scanned image of the object has a relatively high resolution, and pixel redundancy exists. To reduce pixel redundancy of the scanned image, the pre-trained encoder may be obtained through training in a training manner of mapping image patches in the scanned image to discrete codes and reconstructing the scanned image based on the discrete codes. Based on this, an operation of obtaining the pre-trained encoder includes: first, a scanned image of a second object is taken as a third sample image, the third sample image is inputted into an initial encoder for image encoding, and third image patch features respectively corresponding to a plurality of third image patches in the third sample image are outputted. Second, the plurality of third image patch features are discretized into a plurality of third image patch codes according to a plurality of preset discrete codes, that is, the plurality of third image patch codes belong to the plurality of preset discrete codes. Then, the third image patch codes respectively corresponding to the plurality of third image patch features are inputted into an initial decoder to perform image reconstruction on the third sample image, and a reconstructed sample image of the third sample image is outputted. Finally, model training is performed on the initial encoder and the plurality of preset discrete codes according to the reconstructed sample image, the third sample image, and loss functions of the initial encoder and the initial decoder, to obtain the pre-trained encoder. Therefore, this application provides a possible implementation. The operation of obtaining the pre-trained encoder includes S1 to S4 (not shown in the figure):

S1: Perform image encoding on a third sample image through an initial encoder, to obtain third image patch features respectively corresponding to a plurality of third image patches in the third sample image, the third sample image being a scanned image of a second object.

FIG. 5 is a structural diagram of an initial encoder according to an embodiment of this application. The initial encoder is an encoder based on a Vision Transformer (ViT) as a backbone network. The ViT includes 6 transform encoders, and each transform encoder includes one normalization layer (Norm layer), one multi-head attention layer, one normalization layer (Norm layer), and one multi-layer perceptron (MLP).

The second object may be any object. The image defect detection model obtained through training in the embodiments of this application is configured to perform defect detection on a to-be-inspected product, and the to-be-inspected product belongs to a to-be-inspected object. Therefore, to be more applicable to a defect detection scenario, the second object may be a second to-be-inspected object.

Similar to the first sample image and the second sample image, the third sample image may be an area array scanned image of the second object, or may be a line scanned image of the second object.

S2: Determine third image patch codes respectively corresponding to the plurality of third image patch features from a plurality of preset discrete codes, the third image patch codes respectively corresponding to the plurality of third image patch features belonging to the plurality of preset discrete codes.

Each preset discrete code is a code including a plurality of integer values, and a dimension of each preset discrete code is the same as a dimension of output data of the initial encoder. That is, the dimension of each preset discrete code is the same as a dimension of each third image patch feature.

S3: Perform image reconstruction on the third sample image according to the third image patch codes respectively corresponding to the plurality of third image patch features through an initial decoder, to obtain a reconstructed sample image.

S4: Perform model training on the initial encoder and the plurality of preset discrete codes according to the reconstructed sample image, the third sample image, and loss functions of the initial encoder and the initial decoder, to obtain the pre-trained encoder.

In S1 to S4, according to the plurality of preset discrete codes, the plurality of third image patches in the third sample image is mapped to the plurality of third image patch codes belonging to the plurality of preset discrete codes through the initial encoder, and the initial encoder and the plurality of preset discrete codes are optimized in a training manner of reconstructing the third sample image according to the plurality of third image patch codes through the initial decoder, to enhance a training speed and a training effect of the initial encoder. In this way, the pre-trained encoder can reduce pixel redundancy of a scanned image, and enhance a training speed and a training effect of the initial reconstruction model. In addition, a problem of overfitting of the first reconstruction model obtained by training the initial reconstruction model can be avoided.

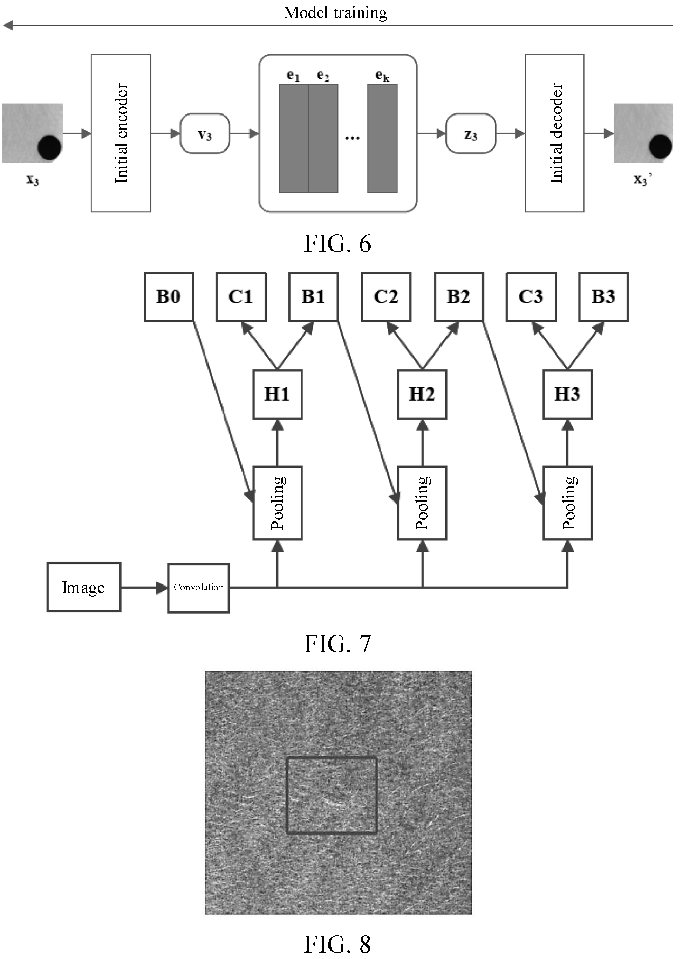

As an example of S1 to S4, FIG. 6 is a schematic diagram of a pre-trained encoder obtained by training an initial encoder and an initial decoder according to an embodiment of this application. The initial encoder is encoder, the initial decoder is decoder, the third sample image is $x_3$, the third image patch is Patch3, and the plurality of preset discrete codes are E=[$e_1$, $e_2$, ..., $e_K$]. Based on the foregoing example of S201, $x_3$ is inputted into encoder for image encoding, and the plurality of third image patch features $v_3$ corresponding to the plurality of Patch3 in $x_3$ are outputted. The plurality of $v_3$ are discretized into the plurality of $z_3$ according to E=[$e_1$, $e_2$, ..., $e_K$], that is, the plurality of $z_3$ belong to E=[$e_1$, $e_2$, ..., $e_K$]. The plurality of $z_3$ are inputted into decoder to perform image reconstruction on $x_3$, and the reconstructed sample image $x_3$' of $x_3$ is outputted. Model training is performed on encoder and E=[$e_1$, $e_2$, ..., $e_K$] according to $x_3$', $x_3$, and the loss functions of encoder and decoder, to obtain the pre-trained encoder Encoder2, that is, Encoder2 is encoder subjected to training.

Because the process of discretizing the plurality of $v_3$ into the plurality of $z_3$ according to E=[$e_1$, $e_2$, ..., $e_K$] does not support backpropagation, when model training is performed based on backpropagation, training of model parameters involved in the process of discretizing the plurality of $v_3$ into the plurality of $z_3$ according to E=[$e_1$, $e_2$, ..., $e_K$] is stopped, and model parameters involved in the process of inputting $x_3$ into encoder for image encoding and outputting the plurality of $v_3$ corresponding to the plurality of Patch3 in $x_3$ and E=[$e_1$, $e_2$, ..., $e_K$] are directly trained according to $x_3$', $x_3$, and the loss functions of encoder and decoder.

During specific implementation of S2, the third image patch codes respectively corresponding to the plurality of third image patch features may be determined from the plurality of preset discrete codes by a nearest neighbor search method. Specifically, for each third image patch feature, first, a similarity between the third image patch feature and each preset discrete code is calculated, to obtain a plurality of similarities between the third image patch feature and the plurality of preset discrete codes. Then, a preset discrete code corresponding to a maximum similarity in the plurality of similarities is taken as the third image patch code corresponding to the third image patch feature. Therefore, this application provides a possible implementation. S2 includes S21 and S22 (not shown in the figure).

S21: Perform similarity calculation for each third image patch feature according to the third image patch feature and the plurality of preset discrete codes, to obtain a similarity between the third image patch feature and each of the plurality of preset discrete codes.

S22: Determine a preset discrete code corresponding to a maximum similarity as a third image patch code corresponding to the third image patch feature.

In S21 to S22, based on the plurality of preset discrete codes, the plurality of third image patch features are discretized into the plurality of third image patch codes by the nearest neighbor search method, whereby the plurality of third image patches in the third sample image can be accurately mapped to the plurality of third image patch codes belonging to the plurality of preset discrete codes. In this way, accurate image patch code data is provided for subsequently optimizing the initial encoder and the plurality of preset discrete codes, to enable the pre-trained encoder to reduce pixel redundancy of a scanned image.

As an example of S21 and S22, based on the foregoing example of S1 to S4, for each third image patch feature $v_3$, the similarity between $v_3$ and each preset discrete code $e_i$ in the plurality of preset discrete codes $E=[e_1, e_2, ..., e_K]$ is calculated, i being an integer and i=1, 2, ..., K, to obtain the plurality of similarities between $v_3$ and $e_i$; and then $e_i$ corresponding to the maximum similarity in the plurality of similarities is taken as the third image patch code $z_3$ corresponding to $v_3$. The similarity between $v_3$ and $e_i$ may be represented by a distance between $v_3$ and $e_i$, namely, $\|v_3-e_i\|_2$. In this case, $e_i$ corresponding to the maximum similarity in the plurality of similarities satisfies $i=\text{argmin}_i\|v_3-e_i\|_2$.

During specific implementation of S4, the loss functions of the initial encoder and the initial decoder may be cross-entropy loss functions. Based on this, first, the reconstructed sample image and the third sample image are substituted into the cross-entropy loss function, to calculate a second predicted probability that the reconstructed sample image is the third sample image. Then, in view of a fact that training directions of the initial encoder and the initial decoder are to make the reconstructed sample image close to the third sample image, by maximizing the second probability, model training is performed on the initial encoder and the plurality of preset discrete codes to obtain the pre-trained encoder. Therefore, this application provides a possible implementation. The loss functions of the initial encoder and the initial decoder are cross-entropy loss functions; and S4 includes S41 and S42 (not shown in the figure):

S41: Determine, according to the reconstructed sample image, the third sample image, and the cross-entropy loss functions, a second predicted probability that the reconstructed sample image is the third sample image.

S22: Perform model training on the initial encoder and the plurality of preset discrete codes with a goal of maximizing the second predicted probability, to obtain the pre-trained encoder.

In S41 to S42, by calculating the second predicted probability that the reconstructed sample image is the third sample image, a correlation between the plurality of third image patch codes that are obtained by mapping the plurality of third image patches in the third sample image and that belong to the plurality of preset discrete codes and the third sample image is accurately mined. By maximizing the second predicted probability, the initial encoder and the plurality of preset discrete codes are trained according to the training directions of making the reconstructed sample image close to the third sample image, to accurately optimize the initial encoder and the plurality of preset discrete codes. In this way, the pre-trained encoder can reduce pixel redundancy of a scanned image while accurately expressing a feature.

As an example of S41 and S42, based on the example of S1 to S4, the reconstructed sample image $x_3$' and the third sample image $x_3$ are substituted into the cross-entropy loss function, to calculate the second predicted probability $p_2$ that $x_3$' is $x_3$. By maximizing p2, model training is performed on the initial encoder encoder and the plurality of preset discrete codes $E=[e_1, e_2, ..., e_K]$ to obtain the pre-trained encoder Encoder2.

In the foregoing embodiments, corresponding to S1 to S4, during specific implementation of S201, pixel redundancy of the second sample image is reduced, to reduce the difficulty of prediction subsequently performed in S202 that the first predicted codes respectively corresponding to the plurality of second image patches are predicted according to the plurality of first image patch codes through the reconstruction network. The plurality of second image patches in the second sample image need to be mapped, according to a plurality of trained preset discrete codes, to a plurality of second image patch codes belonging to the plurality of trained preset discrete codes through the pre-trained encoder. The plurality of first image patches in the first sample image is encoded, through the image encoder in the initial reconstruction model, into the plurality of first image patch features as the plurality of first image patch codes. Specifically, first, the first sample image is inputted into the image encoder in the initial reconstruction model for image encoding, and the first image patch features respectively corresponding to the plurality of first image patches in the first sample image are outputted. Then, the plurality of second image patches in the second sample image are inputted into the pre-trained encoder for image encoding, and the second image patch features respectively corresponding to the plurality of second image patches are outputted. The plurality of second image patch features are discretized into the plurality of second image patch codes according to the plurality of trained preset discrete codes, that is, the plurality of second image patch codes belong to the plurality of trained preset discrete codes. Therefore, this application provides a possible implementation. The plurality of first image patch codes are a plurality of first image patch features, and the plurality of second image patch codes belong to a plurality of trained preset discrete codes; S201 includes S2010 (not shown in the figure): Perform image encoding on the first sample image through the image encoder in the initial reconstruction model, to obtain a plurality of first image patch features corresponding to the plurality of first image patches. Correspondingly, the operation of obtaining the plurality of second image patch codes includes S5 and S6 (not shown in the figure):

S5: Perform image encoding on the plurality of second image patches through the pre-trained encoder, to obtain second image patch features respectively corresponding to the plurality of second image patches.

S6: Determine second image patch codes respectively corresponding to the plurality of second image patch features from the plurality of trained preset discrete codes.

A dimension of each trained preset discrete code is the same as a dimension of each first image patch feature, and the dimension of each trained preset discrete code is the same as a dimension of each second image patch feature.

In S5 and S6, the plurality of second image patches in the second sample image are mapped, according to the plurality of trained preset discrete codes, to the plurality of second image patch codes belonging to the plurality of trained preset discrete codes through the pre-trained encoder, whereby pixel redundancy of the second sample image can be reduced. In this way, image patch code data is provided for reducing prediction difficulty in subsequently predicting the plurality of first predicted codes corresponding to the plurality of second image patches according to the plurality of first image patch codes through the reconstruction network.

As an example of S2010, and S5 and S6, based on the foregoing examples of S201, and S1 to S4, the first sample image $x_1$ is inputted into Encoder1 in the initial reconstruction model for image encoding, and the plurality of first image patch features $v_1$ corresponding to the plurality of first image patches Patch1 in $x_1$ are outputted. The plurality of second image patches Patch2 in the second sample image $x_2$ are inputted into the pre-trained encoder for image encoding, and the plurality of second image patch features $v_2$ corresponding to the plurality of Patch2 are outputted. The plurality of $v_2$ are discretized into the plurality of $z_2$ according to trained $E=[e_1, e_2, ..., e_K]$, that is, the plurality of $z_2$ belong to trained $E=[e_1, e_2, ..., e_K]$. The plurality of $v_1$ are the first image patch codes $z_1$ corresponding to the plurality of Patch1 in $x_1$.

In the foregoing embodiments, corresponding to S2010, and S5 and S6, during specific implementation of S203, the loss function of the initial reconstruction model may be a cross-entropy loss function. Based on this, first, the first predicted codes respectively corresponding to the plurality of second image patches and the second image patch codes respectively corresponding to the plurality of second image patches are substituted into the cross-entropy loss function, to calculate the first predicted probability that each first predicted code is the corresponding second image patch code. Then, based on the plurality of first image patch codes belonging to the plurality of trained preset discrete codes, the training direction of the initial reconstruction model is further refined to make the plurality of first predicted codes close to the plurality of corresponding second image patch codes. Therefore, for each first predicted code, first, whether the first predicted code belongs to the plurality of trained preset discrete codes is determined. If the first predicted code belongs to the plurality of trained preset discrete codes, a preset coefficient associated with a first predicted probability corresponding to the first predicted code is determined to be 1. Then, by maximizing the first predicted probability associated with the preset coefficient of 1, model training is performed on the initial reconstruction model to obtain the first reconstruction model. That is, this application provides a possible implementation. The loss function of the initial reconstruction model is a cross-entropy loss function; and S203 includes S2033 to S2035 (not shown in the figure): S2033: Determine, according to the first predicted codes respectively corresponding to the plurality of second image patches, the second image patch codes respectively corresponding to the plurality of second image patches, and the cross-entropy loss function, a first predicted probability that each first predicted code is the corresponding second image patch code.

S2034: Determine, for each first predicted code, a preset coefficient associated with a first predicted probability corresponding to the first predicted code to be 1 if the first predicted code belongs to the plurality of trained preset discrete codes.

S2035: Perform model training on the initial reconstruction model with a goal of maximizing the first predicted probability associated with the preset coefficient of 1, to obtain the first reconstruction model.

In S2033 to S2035, by calculating the plurality of first predicted probabilities that the plurality of first predicted codes are the plurality of corresponding second image patch codes, the correlation between the plurality of scanned images of the same object under different lighting parameters is accurately mined. If the plurality of first predicted codes belong to the plurality of trained preset discrete codes, by maximizing the first predicted probabilities corresponding to the plurality of first predicted codes, the initial reconstruction model is trained according to the training direction of making the plurality of first predicted codes close to the corresponding plurality of second image patch codes. In this way, self-supervised training of the initial reconstruction model is achieved further accurately, and the image encoder in the initial reconstruction model is further optimized, to endow the image encoder in the first reconstruction model with high feature expression capability.

As an example of S2033 to S2035, based on the foregoing examples of S203, and S2011 and S2012, the plurality of first predicted codes $z_p$ and the plurality of second image patch codes $z_2$ are substituted into the cross-entropy loss function, to calculate the first predicted probability that each $z_p$ is corresponding $z_2$, that is, a plurality of $p_1$ are obtained. For each $z_p$, first, whether $z_p$ belongs to the plurality trained preset discrete codes $E=[e_1, e_2, ..., e_K]$ is determined, and if $z_p$ belongs to trained $E=[e_1, e_2, ..., e_K]$, the preset coefficient associated with $p_1$ corresponding to $z_p$ is determined to be 1. Then, by maximizing the plurality of $p_1$ associated with the preset coefficient of 1, model training is performed on the initial reconstruction model to obtain the first reconstruction model.

During specific implementation of S2034, to reduce the determination difficulty in determining whether the first predicted code belongs to the plurality of trained preset discrete codes, corresponding preset discrete identifiers may be configured for the plurality of trained preset discrete codes. Based on this, for each first predicted code, whether the first predicted code belongs to the plurality of trained preset discrete codes does not need to be determined, whether the first predicted code corresponds to any preset discrete identifier in the plurality of preset discrete identifiers is determined, and if the first predicted code corresponds to any preset discrete identifier in the plurality of preset discrete identifiers, which indicates that the first predicted code belongs to the plurality of trained preset discrete codes, the preset coefficient associated with the first predicted probability corresponding to the first predicted code is determined to be 1. Therefore, this application provides a possible implementation. S2034 includes S7 and S8 (not shown in the figure):

S7: Obtain preset discrete identifiers respectively corresponding to the plurality of trained preset discrete codes.

S8: Determine, for each first predicted code, the preset coefficient associated with the first predicted probability corresponding to the first predicted code to be 1 if the first predicted code corresponds to any preset discrete identifier in the plurality of preset discrete identifiers.

In S7 to S8, based on the plurality of corresponding preset discrete identifiers configured for the plurality of trained preset discrete codes, whether the first predicted code corresponds to any preset discrete identifier in the plurality of preset discrete identifiers is determined, instead of determining whether the first predicted code belongs to the plurality of trained preset discrete codes. The determination operation is simple and convenient, the determination difficulty is reduced, and training of the initial reconstruction model is accelerated.

As an example of S7 and S8, based on the foregoing example of S2034, the plurality of preset discrete identifiers $C=[1, 2, ..., K]$ corresponding to the plurality of trained preset discrete codes $E=[e_1, e_2, ..., e_K]$ are obtained. For each $z_p$, first, whether $z_p$ corresponds to any preset discrete identifier in $C=[1, 2, ..., K]$ is determined, and if $z_p$ corresponds to any preset discrete identifier in $C=[1, 2, ..., K]$, the preset coefficient associated with $p_1$ corresponding to $z_p$ is determined to be 1.

Based on the foregoing descriptions, a formal representation of the loss function of the initial reconstruction model may be, for example, shown as follows:

$$L = \sum_{j \to m \times n} \sum_{C=1,2,...,K} \Pi(c_j = C) \log y_j$$

where $m \times n$ represents a quantity of the plurality of first predicted codes, j is a positive integer, and $y_j$ represents a first predicted probability that a $j^{th}$ first predicted code is a corresponding $j^{th}$ second image patch code, $c_j$ represents a code identifier corresponding to the $j^{th}$ first predicted code, and $\Pi(c_j=C)$ represents a preset coefficient associated with $y_j$ corresponding to the $j^{th}$ first predicted code. When the $j^{th}$ first predicted code corresponds to any preset discrete identifier in $C=[1, 2, ..., K]$, $\Pi(c_j=C)=1$; or when the $j^{th}$ first predicted code does not correspond to any preset discrete identifier in $C=[1, 2, ..., K]$, $\Pi(c_j=C)=0$.

In addition, in the embodiments of this application, to accelerate training of the initial reconstruction model, after the plurality of first image patch codes corresponding to the plurality of first image patches are obtained by performing S201, the plurality of first image patch codes do not need to be inputted into the reconstruction network in the initial reconstruction model to perform code prediction on the plurality of second image patches, and some first image patch codes corresponding to some first image patches may be inputted into the reconstruction network in the initial reconstruction model to perform code prediction on some second image patches, whereby a quantity of predicted codes, and training of the initial reconstruction model is accelerated.

During specific implementation, first, random sampling is performed on the plurality of first image patches to obtain some first image patches, namely, a first quantity of first image patches. The first quantity is less than a patch quantity of the plurality of first image patches. Then, first image patch codes respectively corresponding to the first quantity of first image patches are inputted into the reconstruction network in the initial reconstruction model, code prediction is performed on a second quantity of second image patches, and first predicted codes respectively corresponding to the second quantity of second image patches are outputted. The second quantity of second image patches correspond to the first quantity of first image patches. Correspondingly, model training is subsequently performed on the initial reconstruction model according to the second quantity of first predicted codes, second image patch codes respectively corresponding to the second quantity of second image patches, and the loss function of the initial reconstruction model, to obtain the first reconstruction model.

Therefore, this application provides a possible implementation. The method further includes S9 (not shown in the figure): Perform random sampling on the plurality of first image patches, to obtain a first quantity of first image patches, the first quantity being less than a patch quantity of the plurality of first image patches. Correspondingly, S202 includes S2021 (not shown in the figure): Perform code prediction on a second quantity of second image patches according to first image patch codes respectively corresponding to the first quantity of first image patches through the reconstruction network in the initial reconstruction model, to obtain first predicted codes respectively corresponding to the second quantity of second image patches. S203 includes S2036 (not shown in the figure): Perform model training on the initial reconstruction model according to the first predicted codes respectively corresponding to the second quantity of second image patches, second image patch codes respectively corresponding to the second quantity of second image patches, and the loss function of the initial reconstruction model, to obtain the first reconstruction model.

As an example of S9, S2021, and S2036, the first quantity is $s_1$, the second quantity is $s_2$, and $s_1$ and $s_2$ are both positive integers. Based on the foregoing example of S201, $s_1$ is less than a patch quantity of the plurality of first image patches Patch1, $s_2$ is less than a patch quantity of the plurality of second image patches Patch2, and the quantity $s_1$ of Patch1 corresponds to the quantity $s_2$ of Patch2. Random sampling is performed on the plurality of Patch1 to obtain the quantity $s_1$ of Patch1, the quantity $s_1$ of first image patch codes $z_1$ corresponding to the quantity $s_1$ of Patch1 are inputted into the reconstruction network in the initial reconstruction model, code prediction is performed on the quantity $s_2$ of Patch2, and the quantity $s_2$ of first predicted codes $z_p$ corresponding to the quantity $s_2$ of Patch2 are outputted. Model training is performed on the initial reconstruction model according to the quantity $s_2$ of $z_p$, the quantity $s_2$ of second image patch codes $z_2$ corresponding to the quantity $s_2$ of Patch2, and the loss function of the initial reconstruction model, to obtain the first reconstruction model.

In addition, in the embodiments of this application, by performing S201 to S203, the plurality of first image patches in the first sample image are encoded into the plurality of first image patch codes through the initial reconstruction model, and the first predicted codes respectively corresponding to the plurality of second image patches are predicted according to the plurality of first image patch codes. In this way, reconstruction of the plurality of second image patch codes is achieved, to mine the correlation between the first sample image and the second sample image. Based on the first reconstruction model obtained through self-supervised training of the initial reconstruction model, to fully mine the correlation between the first sample image and the second sample image, and further optimize the image encoder in the initial reconstruction model, to endow the image encoder in the first reconstruction model with high feature expression capability, the plurality of second image patches may be further encoded into a plurality of fourth image patch codes through the first reconstruction model, and second predicted codes respectively corresponding to the plurality of first image patches are predicted according to the plurality of fourth image patch codes. In this way, reconstruction of image patch codes of the plurality of first image patches is achieved, to fully mine the correlation between the first sample image and the second sample image. Self-supervised training is performed on the first reconstruction model to obtain a second reconstruction model. In this way, a feature expression capability of an image encoder in the second reconstruction model is higher than the feature expression capability of the image encoder in the first reconstruction model. Correspondingly, compared with the image encoder in the first reconstruction model, the image encoder in the second reconstruction model is more suitable for constructing the initial detection model configured to train the image defect detection model.

During specific implementation, first, the plurality of second image patches are inputted into the image encoder in the first reconstruction model for image encoding, and the fourth image patch codes respectively corresponding to the plurality of second image patches are outputted. Second, the fourth image patch codes respectively corresponding to the plurality of second image patches are inputted into a reconstruction network in the first reconstruction model, code prediction is performed on the plurality of first image patches, and the second predicted codes respectively corresponding to the plurality of first image patches are outputted. Then, model training is performed on the first reconstruction model according to the plurality of second predicted codes, a plurality of fifth image patch codes corresponding to the plurality of first image patches, and a loss function of the first reconstruction model, to obtain the second reconstruction model. The plurality of fifth image patch codes are obtained by inputting the plurality of first image patches into the pre-trained encoder for image encoding. Finally, an image encoder in the second reconstruction model is determined as the image encoder in the initial detection model. Therefore, this application provides a possible implementation. The method further includes S10 to S12 (not shown in the figure):

S10: Perform image encoding on the plurality of second image patches through the image encoder in the first reconstruction model, to obtain fourth image patch codes respectively corresponding to the plurality of second image patches, and obtain fifth image patch codes respectively corresponding to the plurality of first image patches, the fifth image patch codes respectively corresponding to the plurality of first image patches being obtained by performing image encoding on the plurality of first image patches through the pre-trained encoder.

S11: Perform code prediction on the plurality of first image patches according to the fourth image patch codes respectively corresponding to the plurality of second image patches through a reconstruction network in the first reconstruction model, to obtain second predicted codes respectively corresponding to the plurality of first image patches.

S12: Perform model training on the first reconstruction model according to the second predicted codes respectively corresponding to the plurality of first image patches, the fifth image patch codes respectively corresponding to the plurality of first image patches, and a loss function of the first reconstruction model, to obtain a second reconstruction model.

Correspondingly, S204 includes S2041 (not shown in the figure): Determine an image encoder in the second reconstruction model as the image encoder in the initial detection model.

In conclusion, a specific architecture of the initial detection model is not limited in the embodiments of this application. The initial detection model may be a multi-stage cascade detector, an end-to-end set prediction-based detector, or the like. FIG. 7 is a schematic diagram of a multi-stage cascade detector according to an embodiment of this application. B0 represents a detection box in a first stage, H1 represents a detection network in a second stage, C1 represents a classification result in the second stage, and B1 represents a detection box in the second stage; H2 represents a detection network in a third stage, C2 represents a classification result in the third stage, and B2 represents a detection box in the third stage; and H3 represents a detection network in a fourth stage, C3 represents a classification result in the fourth stage, and B3 represents a detection box in the fourth stage.

FIG. 8 is a schematic diagram of output data of defect detection performed on a scanned image of a to-be-inspected product through an image defect detection model according to an embodiment of this application. The to-be-inspected product has a defect. After an image encoder in an initial detection model is determined by the foregoing embodiment and the image defect detection model is obtained through training, the scanned image of the to-be-inspected product is inputted into the image defect detection model for defect detection, and a defect detection box in the scanned image of the to-be-inspected product is outputted.

Based on the implementations of this application provided in the foregoing aspects, the implementations may be further combined to provide more implementations.

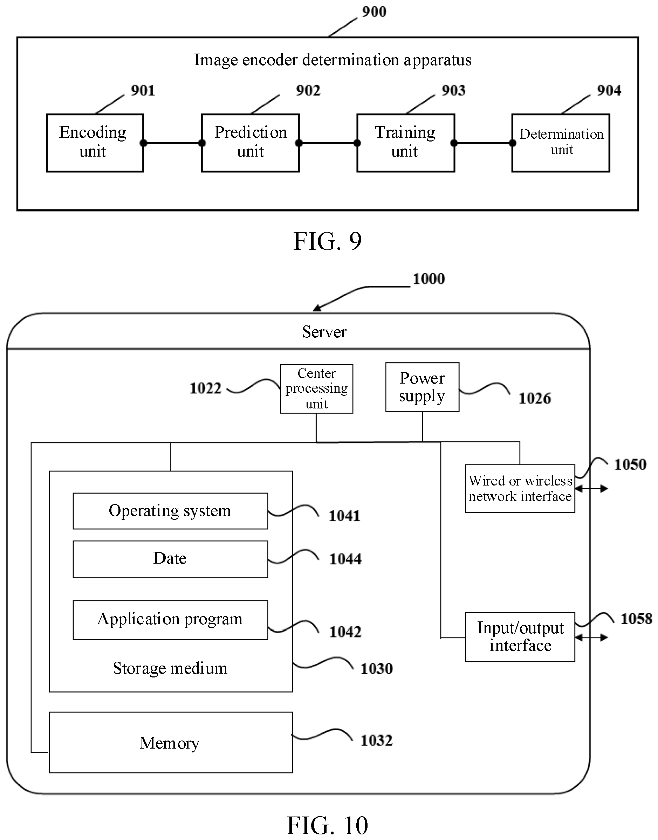

Based on the image encoder determination method provided in the embodiment corresponding to FIG. 2, the embodiments of this application further provide an image encoder determination apparatus. FIG. 9 is a structural diagram of an image encoder determination apparatus according to an embodiment of this application. An image encoder determination apparatus 900 includes: an encoding unit 901, a prediction unit 902, a training unit 903, and a determination unit 904.

The encoding unit 901 is configured to perform image encoding on a first sample image through an image encoder in an initial reconstruction model, to obtain first image patch codes respectively corresponding to a plurality of first image patches in the first sample image, and obtain second image patch codes respectively corresponding to a plurality of second image patches in a second sample image, the second image patch codes respectively corresponding to the plurality of second image patches being obtained by respectively performing image encoding on the plurality of second image patches through a pre-trained encoder; and the first sample image and the second sample image being a plurality of scanned images of a first object under different lighting parameters.

The prediction unit 902 is configured to perform code prediction on the plurality of second image patches in the second sample image according to the first image patch codes respectively corresponding to the plurality of first image patches through a reconstruction network in the initial reconstruction model, to obtain first predicted codes respectively corresponding to the plurality of second image patches.

The training unit 903 is configured to perform model training on the initial reconstruction model according to the first predicted codes respectively corresponding to the plurality of second image patches, the second image patch codes respectively corresponding to the plurality of second image patches, and a loss function of the initial reconstruction model, to obtain a first reconstruction model.

The determination unit 904 is configured to determine an image encoder in the first reconstruction model as an image encoder in an initial detection model configured to train an image defect detection model, the initial detection model being configured to train the image defect detection model.

In a possible implementation, the loss function of the initial reconstruction model is a cross-entropy loss function; and the training unit 903 is specifically configured to:

determine, according to the first predicted codes respectively corresponding to the plurality of second image patches, the second image patch codes respectively corresponding to the plurality of second image patches, and the cross-entropy loss function, a first predicted probability that each first predicted code is the corresponding second image patch code; and

perform model training on the initial reconstruction model with a goal of maximizing the plurality of first predicted probabilities, to obtain the first reconstruction model.

In a possible implementation, the training unit 903 is further configured to:

perform image encoding on a third sample image through an initial encoder, to obtain third image patch features respectively corresponding to a plurality of third image patches in the third sample image, the third sample image being a scanned image of a second object;

determine third image patch codes respectively corresponding to the plurality of third image patch features from a plurality of preset discrete codes, the third image patch codes respectively corresponding to the plurality of third image patch features belonging to the plurality of preset discrete codes;

perform image reconstruction on the third sample image according to the third image patch codes respectively corresponding to the plurality of third image patch features through an initial decoder, to obtain a reconstructed sample image; and

perform model training on the initial encoder and the plurality of preset discrete codes according to the reconstructed sample image, the third sample image, and loss functions of the initial encoder and the initial decoder, to obtain the pre-trained encoder.

In a possible implementation, the determination unit 904 is further configured to:

perform similarity calculation for each third image patch feature according to the third image patch feature and the plurality of preset discrete codes, to obtain a similarity between the third image patch feature and each of the plurality of preset discrete codes; and

determine a preset discrete code corresponding to a maximum similarity as a third image patch code corresponding to the third image patch feature.

In a possible implementation, the loss functions of the initial encoder and the initial decoder are cross-entropy loss functions; and the training unit 903 is further specifically configured to:

determine, according to the reconstructed sample image, the third sample image, and the cross-entropy loss functions, a second predicted probability that the reconstructed sample image is the third sample image; and

perform model training on the initial encoder and the plurality of preset discrete codes with a goal of maximizing the second predicted probability, to obtain the pre-trained encoder.

In a possible implementation, the first image patch codes respectively corresponding to the plurality of first image patches are first image patch features, and the second image patch codes respectively corresponding to the plurality of second image patches belong to a plurality of trained preset discrete codes; and the encoding unit 901 is specifically configured to:
perform image encoding on the first sample image through the image encoder in the initial reconstruction model, to obtain first image patch features respectively corresponding to the plurality of first image patches.
The encoding unit 901 is further specifically configured to:

perform image encoding on the plurality of second image patches through the pre-trained encoder, to obtain second image patch features respectively corresponding to the plurality of second image patches; and

determine second image patch codes respectively corresponding to the plurality of second image patch features from the plurality of trained preset discrete codes.

In a possible implementation, the loss function of the initial reconstruction model is a cross-entropy loss function; and the training unit 903 is specifically configured to:

determine, according to the first predicted codes respectively corresponding to the plurality of second image patches, the second image patch codes respectively corresponding to the plurality of second image patches, and the cross-entropy loss function, a first predicted probability that each first predicted code is the corresponding second image patch code;

determine, for each first predicted code, a preset coefficient associated with a first predicted probability corresponding to the first predicted code to be 1 if the first predicted code belongs to the plurality of trained preset discrete codes; and

perform model training on the initial reconstruction model with a goal of maximizing the first predicted probability associated with the preset coefficient of 1, to obtain the first reconstruction model.

In a possible implementation, the determination unit 904 is further configured to:

obtain preset discrete identifiers respectively corresponding to the plurality of trained preset discrete codes; and

determine, for each first predicted code, the preset coefficient associated with the first predicted probability corresponding to the first predicted code to be 1 if the first predicted code corresponds to any preset discrete identifier in the plurality of preset discrete identifiers.

In a possible implementation, the apparatus further includes: a sampling unit.

The sampling unit is configured to perform random sampling on the plurality of first image patches, to obtain a first quantity of first image patches, the first quantity being less than a patch quantity of the plurality of first image patches.

The prediction unit 902 is specifically configured to:

perform code prediction on a second quantity of second image patches according to first image patch codes respectively corresponding to the first quantity of first image patches through the reconstruction network in the initial reconstruction model, to obtain first predicted codes respectively corresponding to the second quantity of second image patches, the second quantity of second image patches corresponding to the first quantity of first image patches.

The training unit 903 is specifically configured to:

perform model training on the initial reconstruction model according to the first predicted codes respectively corresponding to the second quantity of second image patches, second image patch codes respectively corresponding to the second quantity of second image patches, and the loss function of the initial reconstruction model, to obtain the first reconstruction model.

In a possible implementation, the encoding unit 901 is further configured to:

perform image encoding on the plurality of second image patches through the image encoder in the first reconstruction model, to obtain fourth image patch codes respectively corresponding to the plurality of second image patches, and obtain fifth image patch codes respectively corresponding to a plurality of first image patches, the fifth image patch codes respectively corresponding to the plurality of first image patches being obtained by performing image encoding on the plurality of first image patches through the pre-trained encoder.

The prediction unit 902 is further configured to: perform code prediction on the plurality of first image patches according to the fourth image patch codes respectively corresponding to the plurality of second image patches through a reconstruction network in the first reconstruction model, to obtain second predicted codes respectively corresponding to the plurality of first image patches.

The training unit 903 is further configured to: perform model training on the first reconstruction model according to the second predicted codes respectively corresponding to the plurality of first image patches, the fifth image patch codes respectively corresponding to the plurality of first image patches, and a loss function of the first reconstruction model, to obtain a second reconstruction model.

The determination unit 904 is specifically configured to:
determine an image encoder in the second reconstruction model as the image encoder in the initial detection model.

According to the foregoing technical solution, first, the first sample image is inputted into the image encoder in the initial reconstruction model for image encoding, the first image patch codes respectively corresponding to the plurality of first image patches in the first sample image are outputted, and the second image patch codes respectively corresponding to the plurality of second image patches in the second sample image are obtained. The second image patch codes respectively corresponding to the plurality of second image patches are obtained by respectively performing image encoding on the plurality of second image patches through the pre-trained encoder, are accurate encoding results of the second image patches, and can serve as supervisory signals for training the initial reconstruction model. The first sample image and the second sample image are the plurality of scanned images of the first object under different lighting parameters. A plurality of scanned images of the same object under different lighting parameters have a correlation. Therefore, the correlation may be mined by reconstructing image patch codes. In view of this, the first image patch codes respectively corresponding to the plurality of first image patches are inputted into the reconstruction network in the initial reconstruction model, to mine a correlation between the plurality of scanned images. Code prediction is performed on the plurality of second image patches in the second sample image based on the first image patch codes respectively corresponding to the plurality of first image patches, and the first predicted codes respectively corresponding to the plurality of second image patches are outputted. The first predicted code is a predicted encoding result. Therefore, model training may be performed on the initial reconstruction model according to the first predicted codes respectively corresponding to the plurality of second image patches, the second image patch codes respectively corresponding to the plurality of second image patches, and the loss function of the initial reconstruction model, to obtain the first reconstruction model. In this way, the image encoder in the initial reconstruction model is optimized, to endow the image encoder in the first reconstruction model with high feature expression capability.

Then, the image encoder in the first reconstruction model is determined as the image encoder in the initial detection model configured to train the image defect detection model. The image encoder in the foregoing first reconstruction model obtained through self-supervised training is taken as the image encoder in the initial detection model, whereby a quantity of labeled defect samples can be reduced. Subsequently, the image defect detection model with high feature expression capability can be obtained by training the initial detection model with the defect samples in combination with a large number of scanned images of a normal object serving as normal samples.

Based on this, the apparatus takes advantage of the characteristics that a plurality of scanned images of the same object under different lighting parameters have a correlation, the correlation is mined by reconstructing image patch codes, and the image encoder in the reconstruction model is optimized, to endow the image encoder with high feature expression capability. The optimized image encoder is applied to the detection model, whereby a quantity of labeled defect samples is reduced, and labeling time and labeling cost are reduced. Subsequently, the image defect detection model with high feature expression capability can be obtained through training with the defect samples in combination with a large number of normal samples. In this way, training cost of the image defect detection model is reduced, and the image defect detection model is applicable to a product quality inspection scenario with few defect products.

The embodiments of this application further provide a computer device. The computer device may be a server. FIG. 10 is a structural diagram of a server according to an embodiment of this application. A server 1000 may vary significantly due to different configurations or performance, and may include one or more processors such as a central processing unit (CPU) 1022, a memory 1032, and one or more storage media 1030 (such as one or more mass storage devices) that store an application program 1042 or data 1044. The memory 1032 and the storage medium 1030 may be temporary storage or permanent storage. The program stored in the storage medium 1030 may include one or more modules (not shown in the figure), and each module may include a series of instruction operations for the server. Further, the CPU 1022 may be configured to communicate with the storage medium 1030, and perform, on the server 1000, the series of instruction operations in the storage medium 1030.

The server 1000 may further include one or more power supplies 1026, one or more wired or wireless network interfaces 1050, one or more input/output interfaces 1058, and/or one or more operating systems 1041 such as Windows Server™, Mac OS X™, Unix™, Linux™, and FreeBSD™.

In this embodiment, the CPU 1022 in the server 1000 may perform the method provided in various implementations of the foregoing embodiments.

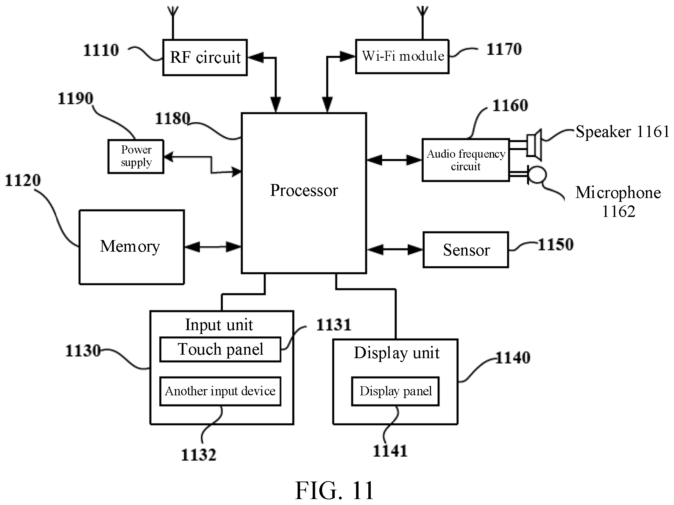

The computer device provided in the embodiments of this application may alternatively be a terminal. FIG. 11 is a structural diagram of a terminal according to an embodiment of this application. An example in which the terminal is a smartphone is used. The smartphone includes: components such as a radio frequency (RF) circuit 1110, a memory 1120, an input unit 1130, a display unit 1140, a sensor 1150, an audio frequency circuit 1160, a Wireless Fidelity (Wi-Fi) module 1170, a processor 1180, and a power supply 11120. The input unit 1130 may include a touch panel 1131 and another input device 1132. The display unit 1140 may include a display panel 1141. The audio frequency circuit 1160 may include a speaker 1161 and a microphone 1162. A person skilled in the art appreciates that the structure of the smartphone shown in FIG. 11 is not intended to be constructed as limiting the smartphone, and the smartphone may include more or fewer components than those shown in the figure, or some components may be combined, or a different component deployment may be adopted.

The memory 1120 may be configured to store a software program and a module. The processor 1180 runs the software program and module stored in the memory 1120, to implement various functional applications and data processing of the smartphone. The memory 1120 may primarily include a program storage area and a data storage area. The program storage area may store an operating system, an application program required by at least one function (such as a sound playback function or an image display function), and the like. The data storage area may store data (such as audio data or a telephone book) created according to use of the smartphone, and the like. In addition, the memory 1120 may include a high-speed random-access memory, and may further include a non-volatile memory such as at least one magnetic disk storage device, a flash device, or another volatile solid-state storage device.

The processor 1180 is a control center of the smartphone, is connected to various parts of the entire smartphone via various interfaces and lines, and executes various functions of the smartphone and processes data by running or executing the software program and/or module stored in the memory 1120 and invoking data stored in the memory 1120. In an embodiment, the processor 1180 may include one or more processing units. In a preferred embodiment, the processor 1180 may be integrated with an application processor and a modem. The application processor primarily processes an operating system, a user interface, an application program, and the like. The modem primarily processes wireless communication. The foregoing modem may not be integrated into the processor 1180.

In this embodiment, the processor 1180 in the smartphone may perform the method provided in various implementations of the foregoing embodiments.

According to an aspect of this application, a computer-readable storage medium is provided. The computer-readable storage medium is configured to store a computer program. The computer program, when run on a computer device, causes the computer device to perform the method provided in various implementations of the foregoing embodiments.

According to an aspect of this application, a computer program product is provided. The computer program product includes a computer program, and the computer program is stored in a computer-readable storage medium. A processor of a computer device reads the computer program from the computer-readable storage medium and executes the computer program, to cause the computer device to perform the method provided in various implementations of the foregoing embodiments.

The descriptions of processes or structures corresponding to the foregoing drawings have respective focuses. For a part that is not described in detail in a process or structure, refer to related descriptions of other processes or structures.

Terms "first", "second", and the like in the description and the foregoing drawings of this application are intended to distinguish between similar objects, rather than describe a specific sequence or order. Data termed in such a way is interchangeable in proper circumstances. In this way, the embodiments of this application described herein can be implemented in orders other than the order illustrated or described herein. In addition, the terms "include", "have", and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

In the several embodiments provided in this application, the disclosed system, apparatus, and method may be implemented in other manners. For example, the apparatus embodiments described above are merely an example. For example, the unit division is merely a logical function division and may be other division in practical implementation. For example, a plurality of units or components may be combined or integrated into another system, or some features may be ignored or not performed. In addition, the displayed or discussed mutual coupling or direct coupling or communication connection may be implemented via some interfaces. The indirect coupling or communication connection between apparatuses or units may be implemented in electronic, mechanical, or other forms.

The units described as separate parts may or may not be physically separate, and parts displayed as units may or may not be physical units, that is, may be located at one position, or may be distributed on a plurality of network units. Some or all of the units may be selected according to actual requirements to achieve the objective of the solution of this embodiment.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the related art, or all or part of the technical solutions may be embodied in a form of a software product. The computer software product is stored in a storage medium and includes several instructions configured for causing a computer device to perform all or some of operations of the method provided in the embodiments of this application. The foregoing storage medium includes: any medium that can store a computer program, such as a Universal Serial Bus (USB) flash drive, a removable hard disk, a read-only memory (ROM), a random-access memory (RAM), a magnetic disk, an optical disc, or the like.

In conclusion, the foregoing embodiments are merely used to describe the technical solutions of this application, but are not intended to limit this application. Although this application is described in detail with reference to the foregoing embodiments, a person of ordinary skilled in the art appreciates that modifications may still be made to the technical solutions described in the foregoing embodiments or equivalent substitutions may be made to some technical features, and such modifications or substitutions do not cause the essence of the corresponding technical solutions to depart from the spirit and scope of the technical solutions in the embodiments of this application.

## Claims

1. An image encoder determination method, the method being executable by a computer device, the method comprising:

      performing image encoding on a first sample image by means of an image encoder of an initial reconstruction model, to obtain first image patch codes for a plurality of first image patches in the first sample image;
      performing image encoding on a second sample image by means of a pre-trained encoder, to obtain second image patch codes for a plurality of second image patches in the second sample image, wherein the first sample image and the second sample image are images of a first object under different lighting parameters;

performing code prediction on the plurality of second image patches in the second sample image by means of a reconstruction network of the initial reconstruction model, according to the first image patch codes for the plurality of first image patches, to obtain first predicted codes for the plurality of second image patches; and

performing model training on the initial reconstruction model using the first predicted codes , the second image patch codes, and a loss function of the initial reconstruction model, to obtain a first reconstruction model.

2. The method according to claim 1,

wherein the loss function of the initial reconstruction model is a cross-entropy loss function; and

wherein the performing model training on the initial reconstruction model using the first predicted codes, the second image patch codes, and a loss function of the initial reconstruction model, to obtain a first reconstruction model comprises:

determining, according to the first predicted codes, the second image patch codes, and the cross-entropy loss function, a first predicted probability that each first predicted code is the associated second image patch code; and

performing model training on the initial reconstruction model to maximize the plurality of first predicted probabilities, to obtain the first reconstruction model.

3. The method according to claim 1 or 2, wherein an operation of obtaining the pre-trained encoder comprises:

performing image encoding on a third sample image by means of an initial encoder, to obtain third image patch features for a plurality of third image patches in the third sample image, the third sample image being an image of a second object;

determining third image patch codes for the plurality of third image patch features from a plurality of preset discrete codes, the third image patch codes belonging to the plurality of preset discrete codes;

performing image reconstruction on the third sample image according to the third image patch codes by means of an initial decoder, to obtain a reconstructed sample image; and

performing model training on the initial encoder and the plurality of preset discrete codes according to the reconstructed sample image, the third sample image, and loss functions of the initial encoder and the initial decoder, to obtain the pre-trained encoder.

4. The method according to claim 3, wherein the determining third image patch codes for the plurality of third image patch features from a plurality of preset discrete codes comprises:

performing similarity calculation for each third image patch feature according to the third image patch feature and the plurality of preset discrete codes, to obtain a similarity between the third image patch feature and each of the plurality of preset discrete codes; and

determining, in response to a maximum similarity, a preset discrete code as a third image patch code for the third image patch feature.

5. The method according to claim 3 or 4,

wherein the loss functions of the initial encoder and the initial decoder are cross-entropy loss functions; and

wherein the performing model training on the initial encoder and the plurality of preset discrete codes according to the reconstructed sample image, the third sample image, and loss functions of the initial encoder and the initial decoder, to obtain the pre-trained encoder comprises:

determining, according to the reconstructed sample image, the third sample image, and the cross-entropy loss functions, a second predicted probability that the reconstructed sample image is the third sample image; and

performing model training on the initial encoder and the plurality of preset discrete codes to maximize the second predicted probability, to obtain the pre-trained encoder.

6. The method according to any one of claims 3 to 5,

wherein the first image patch codes are first image patch features, and the second image patch codes belong to a plurality of trained preset discrete codes; and

wherein the performing image encoding on a first sample image by means of an image encoder in an initial reconstruction model, to obtain first image patch codes for a plurality of first image patches in the first sample image comprises:

performing image encoding on the first sample image by means of the image encoder in the initial reconstruction model, to obtain first image patch features for the plurality of first image patches; and
wherein the image encoding on a second sample image by means of a pre-trained encoder, to obtain second image patch codes for a plurality of second image patches in the second sample image comprises:

performing image encoding on the second sample image by means of the pre-trained encoder, to obtain second image patch features for the plurality of second image patches; and
determining second image patch codes from the plurality of trained preset discrete codes.

7. The method according to claim 6,

wherein the loss function of the initial reconstruction model is a cross-entropy loss function; and
wherein the performing model training on the initial reconstruction model using the first predicted codes, the second image patch codes, and a loss function of the initial reconstruction model, to obtain a first reconstruction model comprises:

determining, according to the first predicted codes, the second image patch codes, and the cross-entropy loss function, a first predicted probability that each first predicted code is the corresponding second image patch code;
determining, for each first predicted code, a preset coefficient associated with a first predicted probability for the respective first predicted code to be 1 in response to the first predicted code belonging to the plurality of trained preset discrete codes; and
performing model training on the initial reconstruction model to maximize the first predicted probability associated with the preset coefficient of 1, to obtain the first reconstruction model.

8. The method according to claim 7, wherein the determining, for each first predicted code, a preset coefficient associated with a first predicted probability for the respective first predicted code to be 1 in response to the first predicted code belonging to the plurality of trained preset discrete codes comprises:

obtaining preset discrete identifiers for the plurality of trained preset discrete codes; and
determining, for each first predicted code, the preset coefficient associated with the first predicted probability for the respective first predicted code to be 1 in response to the first predicted code corresponding to any preset discrete identifier in the plurality of preset discrete identifiers.

9. The method according to any one of claims 1 to 8, wherein the method further comprises:

performing random sampling on the plurality of first image patches, to obtain a first quantity of first image patches, the first quantity being less than a patch quantity of the plurality of first image patches;
wherein the performing code prediction on the plurality of second image patches in the second sample image by means of a reconstruction network in the initial reconstruction model, according to the first image patch codes, to obtain first predicted codes for the plurality of second image patches comprises:

performing code prediction on a second quantity of second image patches by means of the reconstruction network in the initial reconstruction model, according to first image patch codes for the first quantity of first image patches, to obtain first predicted codes for the second quantity of second image patches, the second quantity of second image patches being associated with the first quantity of first image patches; and
wherein the performing model training on the initial reconstruction model using the first predicted codes, the second image patch codes, and a loss function of the initial reconstruction model, to obtain a first reconstruction model comprises:
performing model training on the initial reconstruction model using the first predicted codes for the second quantity of second image patches, second image patch codes for the second quantity of second image patches, and the loss function of the initial reconstruction model, to obtain the first reconstruction model.

10. The method according to any one of claims 1 to 9, wherein the method further comprises:

performing image encoding on the plurality of second image patches by means of the image encoder in the first reconstruction model, to obtain fourth image patch codes for the plurality of second image patches;

performing image encoding on the plurality of first image patches by means of the pre-trained encoder, to obtain fifth image patch codes for the plurality of first image patches;

performing code prediction on the plurality of first image patches by means of a reconstruction network in the first reconstruction model, according to the fourth image patch codes the plurality of second image patches, to obtain second predicted codes for the plurality of first image patches; and

performing model training on the first reconstruction model using the second predicted codes, the fifth image patch codes, and a loss function of the first reconstruction model, to obtain a second reconstruction model; and

wherein the method further comprises:

determining an image encoder in the second reconstruction model as the image encoder in the initial detection model.

11. An image encoder determination apparatus, the apparatus being deployed on a computer device, the apparatus comprising: an encoding unit, a prediction unit, a training unit, and a determination unit,

the encoding unit being configured to: perform image encoding on a first sample image by means of an image encoder in an initial reconstruction model, to obtain first image patch codes for a plurality of first image patches in the first sample image, and perform image encoding on a second sample image by means of a pre-trained encoder, to obtain second image patch codes for a plurality of second image patches in the second sample image, wherein the first sample image and the second sample image are images of a first object under different lighting parameters;

the prediction unit being configured to perform code prediction on the plurality of second image patches in the second sample image by means of a reconstruction network in the initial reconstruction model, according to the first image patch codes for the plurality of first image patches, to obtain first predicted codes for the plurality of second image patches; and

the training unit being configured to perform model training on the initial reconstruction model using the first predicted codes, the second image patch codes, and a loss function of the initial reconstruction model, to obtain a first reconstruction model.

12. The apparatus according to claim 11,

wherein the loss function of the initial reconstruction model is a cross-entropy loss function; and

wherein the training unit is configured to:

determine, according to the first predicted codes, the second image patch codes, and the cross-entropy loss function, a first predicted probability that each first predicted code is the associated second image patch code; and

perform model training on the initial reconstruction model to maximize the plurality of first predicted probabilities, to obtain the first reconstruction model.

13. A computer device, the computer device comprising a processor and a memory,

the memory being configured to store a computer program and transmit the computer program to the processor; and

the processor being configured to perform the method according to any one of claims 1 to 10 based on instructions in the computer program.

14. A computer-readable storage medium, the computer-readable storage medium being configured to store a computer program, the computer program, when run on a computer device, causing the computer device to perform the method according to any one of claims 1 to 10.

15. A computer program product, comprising a computer program, the computer program, when run on a computer device, causing the computer device to perform the method according to any one of claims 1 to 10.

100

First sample image $x_1$

Image encoder Encoder1 in an initial reconstruction model | Image encoding

First image patch codes respectively corresponding to a plurality of first image patches Patch1 in $x_1$

Reconstruction network in the initial reconstruction model | Code prediction

First predicted codes respectively corresponding to a plurality of second image patches Patch2 in a second sample image $x_2$

Loss function in the initial reconstruction model | Model training

Second image patch codes respectively corresponding to the plurality of Patch2

First reconstruction model

Determine

Encoder1 in an initial detection model

FIG. 1

Perform image encoding on a first sample image through an image encoder in an initial reconstruction model, to obtain first image patch codes respectively corresponding to a plurality of first image patches in the first sample image, and obtain second image patch codes respectively corresponding to a plurality of second image patches in a second sample image, the second image patch codes respectively corresponding to the plurality of second image patches being obtain by respectively performing image encoding on the plurality of second image patches through a pre-trained encoder; and the first sample image and the second sample image being a plurality of scanned images of a first object under different lighting parameters — S201

Perform code prediction on the plurality of second image patches in the second sample image according to the first image patch codes respectively corresponding to the plurality of first image patches through a reconstruction network in the initial reconstruction model, to obtain first predicted codes respectively corresponding to the plurality of second image patches — S202

Perform model training on the initial reconstruction model according to the first predicted codes respectively corresponding to the plurality of second image patches, the second image patch codes respectively corresponding to the plurality of second image patches, and a loss function of the initial reconstruction model, to obtain a first reconstruction model — S203

Determine an image encoder in the first reconstruction model as an image encoder in an initial detection model configured to train an image defect detection model, the initial detection model being configured to train the image defect detection model — S204

## FIG. 2

| P001 | P002 | P003 | P004 | P005 | P006 |
| P007 | P008 | P009 | P010 | P011 | P012 |
| P013 | P014 | P015 | P016 | P017 | P018 |
| P019 | P020 | P021 | P022 | P023 | P024 |
| P025 | P026 | P027 | P028 | P029 | P030 |
| P031 | P032 | P033 | P034 | P035 | P036 |

## FIG. 3

Image patch code

Image encoder

Position
embedding
vector

| 1 | 2 | 3 | 4 | 5 | 6 | 7 | 8 | 9 | 10 | ... |

Image patch
embedding
vector

FIG. 4

transformer
encoder

⊕

MLP

Norm

⊕

Muliti-Head
Attention

Norm

FIG. 5

Model training

FIG. 6

FIG. 7

FIG. 8

900

Image encoder determination apparatus

| 901 | 902 | 903 | 904 |
|---|---|---|---|
| Encoding unit | Prediction unit | Training unit | Determination unit |

FIG. 9

1000

Server

1022 — Center processing unit

Power supply — 1026

Wired or wireless network interface — 1050

Operating system — 1041

Date — 1044

Application program — 1042

Storage medium — 1030

Input/output interface — 1058

Memory — 1032

FIG. 10

FIG. 11

## INTERNATIONAL SEARCH REPORT

| International application No. |
| --- |
| **PCT/CN2024/117049** |

**A. CLASSIFICATION OF SUBJECT MATTER**

G06V10/774(2022.01)i

According to International Patent Classification (IPC) or to both national classification and IPC

**B. FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 编码, 解码, 判别, 不同, 光照, 光线, 生成, 缺陷检测, encode, decode, discriminate, different, illuminate, ray, generate, defect detection

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117011650 A (TENCENT TECHNOLOGY (SHENZHEN) CO., LTD.) 07 November 2023 (2023-11-07) description, paragraphs 0038-0154 | 1-15 |
| A | CN 111798400 A (FUZHOU UNIVERSITY) 20 October 2020 (2020-10-20) description, paragraphs 0063-0115 | 1-15 |
| A | CN 111833306 A (BEIJING BAIDU NETCOM SCIENCE AND TECHNOLOGY CO., LTD.) 27 October 2020 (2020-10-27) entire document | 1-15 |
| A | CN 114862811 A (HUNAN UNIVERSITY) 05 August 2022 (2022-08-05) entire document | 1-15 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 October 2024** | **06 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | Publication date (day/month/year) |
|---|---|---|---|---|---|
| CN | 117011650 | A | 07 November 2023 | None | |
| CN | 111798400 | A | 20 October 2020 | None | |
| CN | 111833306 | A | 27 October 2020 | None | |
| CN | 114862811 | A | 05 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311285085